# EUROPEAN PATENT APPLICATION

(11) **EP 3 173 896 A1**
(43) Date of publication of application: **31.05.2017**
(21) Application number: 15196355.0
(22) Date of filing: 25.11.2015
(51) Int. Cl.: G06F 1/16, A45C 11/00, H04B 1/3888, H04M 1/04

(54) **PROTECTIVE CASE WITH A HOLDER**

(71) Applicant: Ocean Springs Metal Manufacture Limited, KLN (HK)
(72) Inventor: Wang, Hai, KLN (HK)
(74) Representative: Walker, Ross Thomson

(57) **Abstract**

The application provides a protective case with a holder, and the protective case comprises a case body (1) configured for accommodating a smart device; and an accommodating recess (11) is defined in the case body (1), and has an opening (110) in an outer surface of the case body (1); the protective case further comprises a holder (2) movably arranged in the accommodating recess (11) and telescopably arranged in the opening (110). The protective case of the application has a dual function in protecting and holding the smart device, and has beauty and practicability.

## Description

### FIELD OF THE INVENTION

The application relates to a field of electronic accessories, and more particularly relates to a protective case with a holder.

### BACKGROUND OF THE INVENTION

With the popularity of smart devices such as tablet computers, smart phones and electronic books, etc., functional demands of smart devices are not limited to phoning, sending messages or reading, and smart devices are regarded as video and audio players more often. When a smart device is used, the smart device can't stand on the table, and needs to be held; and after a long time of watching video and audio contents, hands are easy to be numb. Thus, a holder configured for holding the smart device anytime and anywhere needs to be provided.

At present, an accessory carried together with the smart device is usually a protective case; and most of protective cases are independent. Though some protective cases are provided with a holder, the holder is arranged on an outer surface of these protective cases, which leads to easy damage of the holder and ugliness, as shown in a Chinese patent application CN201310630592.0.

### SUMMARY OF THE INVENTION

The objective of the present application is to provide a protective case with a holder, aiming at the defects in the prior art that a holder is arranged on an outer surface of a protective case, which leads to easy damage of the holder and ugliness.

The technical solutions of the present application for solving the technical problems are as follows:
in one aspect, a protective case is provided, and comprises a case body configured for accommodating a smart device; and an accommodating recess is defined in the case body, and has an opening in an outer surface of the case body; the protective case further comprises a holder movably arranged in the accommodating recess and telescopably arranged in the opening.

In one embodiment, the holder includes a sliding panel slidably arranged in the accommodating recess and telescopably arranged in the opening, and a hinge body rotatably mounted on the sliding panel.

In another embodiment, the protective case further comprises a guiding rail mounted in the accommodating recess and being perpendicular to a plane of the opening; and the sliding panel is slidably arranged on the guiding rail; the protective case further comprises a fold line shaped or curved spring; and one end portion of the spring is fixed in the accommodating recess, and the other end portion of the spring is fixed on the bottom of the sliding panel; when the sliding panel is entirely accommodated in the accommodating recess, the guiding rail and a connecting line between two end portions of the spring cooperatively form an acute angle.

In another embodiment, a first fixing element is arranged on the bottom of the accommodating recess; and a second fixing element is arranged on the sliding panel; and one end portion of the spring is mounted on the first fixing element, and the other end portion of the spring is mounted on the second fixing element; and a gap is defined in a position of the sliding panel that is facing the first fixing element, and the first fixing element is located in the gap; and a limiting recess is defined in a position of the bottom of the accommodating recess that is facing the second fixing element, and the second fixing element is located in the limiting recess.

In another embodiment, the hinge body is rotatably mounted on the sliding panel via a rotation shaft; and an angle formed by the hinge body and the sliding panel is between 0° and 90°.

In another embodiment, two first shaft sleeves are arranged on an outer side portion of the sliding panel, are spaced from each other, and are disposed coaxially; a second shaft sleeve is arranged on a side portion of the hinge body; two opposite end portions of the rotation shaft are rotatably inserted in the two first shaft sleeves respectively, and a middle portion of the rotation shaft is rotatably inserted in the second shaft sleeve.

In another embodiment, the holder further a compressed spring; and the compressed spring is mounted on the rotation shaft, and is located between the first shaft sleeve and the second shaft sleeve to compress the hinge body.

In another embodiment, a gasket is arranged between the compressed spring and the first shaft sleeve, and a gasket is arranged between the compressed spring and the second shaft sleeve.

In another embodiment, a resetting elastic flake is formed on an outer side surface of the sliding panel; and a through-hole is defined in a middle portion of the second shaft sleeve; and the resetting elastic flake extends into the through-hole; and a resetting recess is defined in the rotation shaft; when the hinge body fits the sliding panel closely, the resetting elastic flake also extends into the resetting recess.

The protective case of the present application has the accommodating recess, and has the holder telescopably arranged in the accommodating recess; and as the holder is arranged in the accommodating recess, the holder can avoid damage resulting from collisions and the protective case can be more beautiful. The protective case of the present application further adopts the spring to connect the holder and the case body, so that the holder can be pushed out quickly when the holder is pulled out a certain distance. The protective case of the present application further adopts the resetting elastic flake, so that the sliding panel can fit the hinge body closely. The protective case of the application has a dual function in protecting and holding the smart device, and has beauty and practicability.

### BRIEF DESCRIPTION OF THE DRAWINGS

The present application will be further described with reference to the accompanying drawings and embodiments in the following, in the accompanying drawings:
Fig. 1 is a schematic view of a protective case of a first embodiment of the present application;
Fig. 2 is a schematic view of the protective case shown in Fig. 1, seen from another perspective;
Fig. 3 is an exploded view of the protective case shown in Fig. 1;
Fig. 4 is a schematic view of the protective case shown in Fig. 1, seen from another perspective;
Fig. 5 is an enlarged schematic view of A portion shown in Fig. 4;
Fig. 6 is a first structural schematic view of a connecting relationship between a guiding rail and a sliding panel;
Fig. 7 is a second structural schematic view of a connecting relationship between a guiding rail and a sliding panel;
Fig. 8 is a third structural schematic view of a connecting relationship between a guiding rail and a sliding panel;
Fig. 9 is a first usage state reference view of the protective case shown in Fig. 1;
Fig. 10 is a second usage state reference view of the protective case shown in Fig. 1;
Fig. 11 is an exploded view of a holder shown in Fig. 1;
Fig. 12 is a structural schematic view of a holder shown in Fig. 1;
Fig. 13 is an enlarged schematic view of B portion shown in Fig. 12;
Fig. 14 is a first usage state reference view of the holder shown in Fig. 12;
Fig. 15 is a second usage state reference view of the holder shown in Fig. 12;
Fig. 16 is a structural schematic view of a holder of the protective case of a second embodiment of the present application;
Fig. 17 is an enlarged schematic view of C portion shown in Fig. 16;
Fig. 18 is a first usage state reference view of the holder shown in Fig. 16; and
Fig. 19 is a second usage state reference view of the holder shown in Fig. 16.

### DETAILED DESCRIPTION OF THE PREFERRED EMBODIMENT

The technical problem that the present application will solve is that a holder is arranged on an outer surface of a protective case in the prior art, which leads to easy damage of the holder and ugliness. The technical solution provided by the present application is to provide a protective case has an accommodating recess, wherein a holder can be telescopably arranged in the accommodating recess. As the holder is arranged in the accommodating recess, the holder can avoid damage resulting from collisions and the protective case can be more beautiful.

To make the technical feature, objective and effect of the present application be understood more clearly, now the specific implementation of the present application is described in detail with reference to the accompanying drawings and embodiments.

### First Embodiment

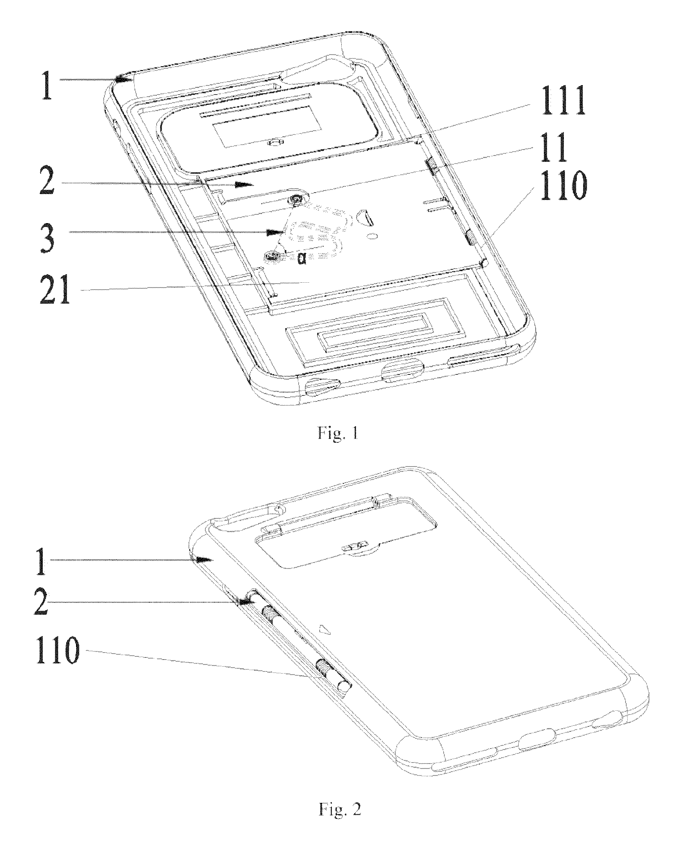

As shown in Fig. 1, Fig. 1 is a schematic view of a protective case of a first embodiment of the present application.

The protective case comprises a case body 1 configured for accommodating a smart device. Specifically, an accommodating space is formed in the case body 1 for accommodating the smart device.

Moreover, in Figs. 1 and 2, an accommodating recess 11 is defined in the case body 1, and has an opening 110 in an outer surface of the case body 1; the protective case further comprises a holder 2; and the holder 2 is movably arranged in the accommodating recess 11, and is telescopably arranged in the opening 110.

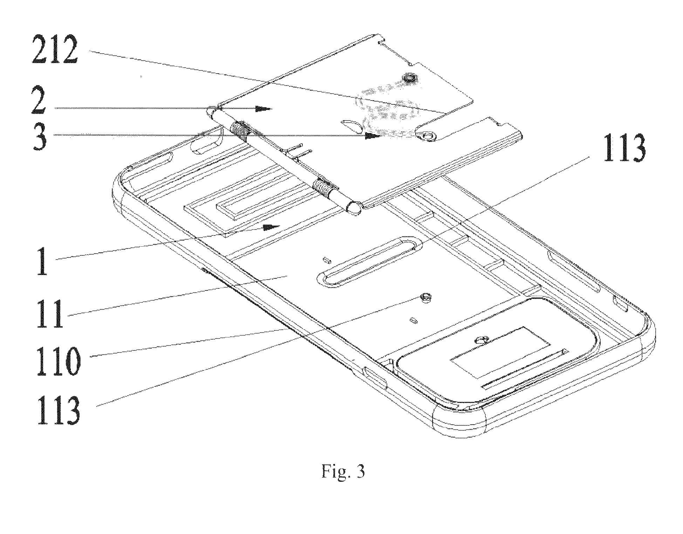

In the embodiment, in Fig. 3, the accommodating recess 11 is connected to the accommodating space, which can reduce the volume of the protective case. It can be understood that the accommodating recess 11 can be separated from the accommodating space completely.

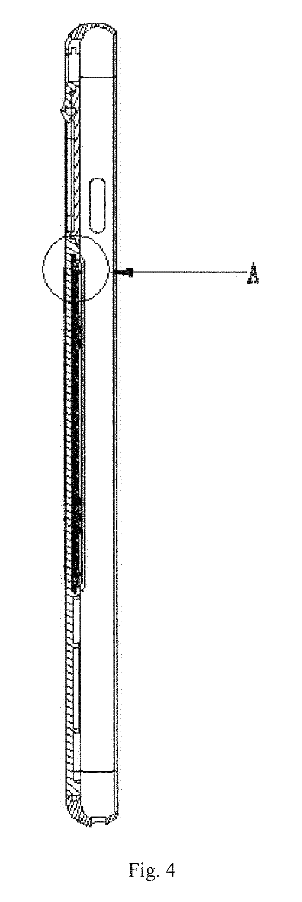

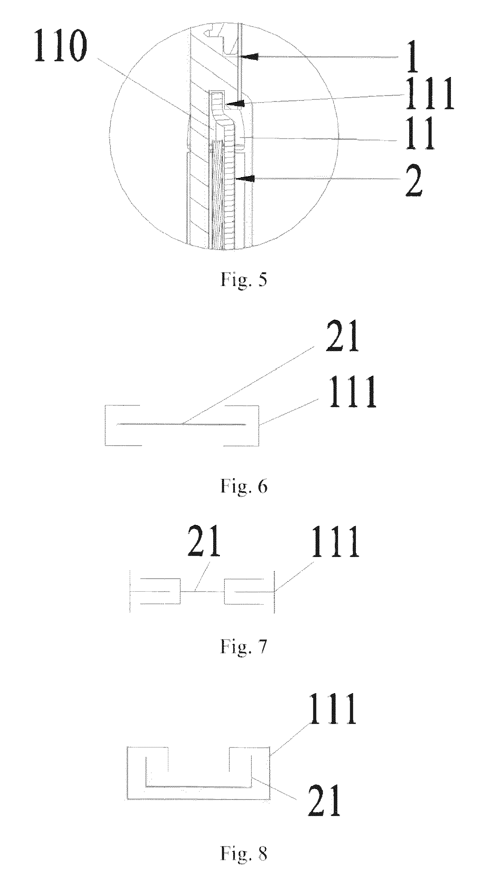

Furthermore, in Figs. 4 and 5, the protective case further comprises a guiding rail 111; and the guiding rail 111 is mounted in the accommodating recess 11, and is perpendicular to a plane of the opening 110. In the embodiment, the guiding rail 111 is arranged on a side surface of the accommodating recess 11. It can be understood that the guiding rail 111 can be arranged on the bottom of the accommodating recess 11.

As shown in Fig. 1, the holder 2 includes a sliding panel 21, and the sliding panel 21 is arranged in the accommodating recess 11, and can slide along the guiding rail 111; and the connecting relationship between the guiding rail 111 and the sliding panel 21 can be the relationship shown in Figs. 6-8. In Figs. 1 and 3, the protective case further comprises a fold line shaped or curved spring 3; and one end portion of the spring 3 is fixed in the accommodating recess 11, and the other end portion of the spring 3 is fixed on the bottom of the sliding panel 21; and when the sliding panel 21 is entirely accommodated in the accommodating recess 11, the guiding rail 111 and a connecting line between two end portions of the spring 3 cooperatively form an acute angle.

The spring 3 can be replaced by a torsional spring and a compressed spring. In additions, the spring 3 can be V-shaped, W-shaped, N-shaped, M-shaped, L-shaped, Z-shaped or circular arc-shaped, etc.

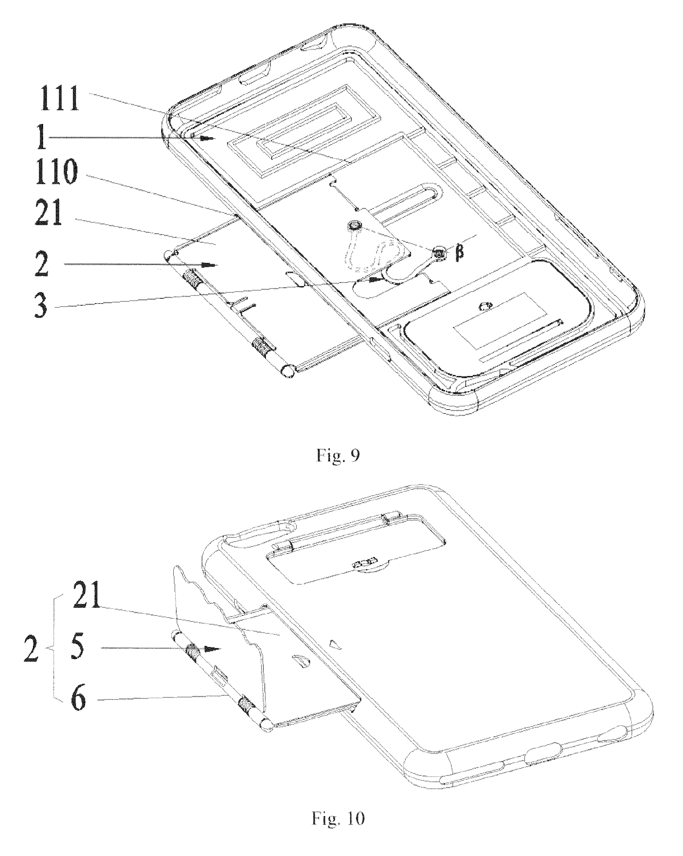

Because the spring 3 is fold line shaped or curved, and when the sliding panel 21 is entirely accommodated in the accommodating recess 11, the guiding rail 111 and the connecting line between two end portions of the spring 3 cooperatively form an acute angle α, the spring 3 compresses the sliding panel 21 to make the sliding panel 21 be entirely accommodated in the accommodating recess 11 all the time, as shown in Fig. 1. When the sliding panel 21 is pulled out a certain distance from the opening 110 to make the guiding rail 111 and the connecting line between two end portions of the spring 3 cooperatively form an obtuse angle β, the spring 3 will push the sliding panel 21 out of the opening 110, so that the sliding panel 21 is automatically pushed out, as shown in Fig. 9.

When the sliding panel 21 is out of the opening 110, the guiding rail 111 and the connecting line between two end portions of the spring 3 cooperatively form an obtuse angle, and the sliding panel 21 will be kept in a state that the sliding panel 21 is out of the opening 110 under the action of the spring 3, as shown in Fig. 9. Then, when the sliding panel 21 is pushed a certain distance towards the opening 110 to make the guiding rail 111 and an connecting line between two end portions of the spring 3 cooperatively form an acute angle, the spring 3 will force the sliding panel 21 into the opening 110, and then compress the sliding panel 21 in the accommodating recess 11, so that the sliding panel 21 is automatically pulled back.

For convenience to mount the spring 3, in the embodiment, as shown in Fig. 3, a first fixing element 112 is arranged on the bottom of the accommodating recess 11; and a second fixing element (not labeled in Figures) is arranged on the sliding panel 21; and one end portion of the spring 3 is mounted on the first fixing element 112 to accomplish connection between the spring 3 and the bottom of the accommodating recess 11, and the other end portion of the spring 3 is mounted on the second fixing element to accomplish connection between the spring 3 and the sliding panel 21.

The first fixing element 112 on the bottom of the accommodating recess 11 and the second fixing element on the sliding panel 21 easily cause a problem that the sliding panel 21 slides not smoothly. To avoid this problem, a gap 212 is defined in a position of the sliding panel 21 that is facing the first fixing element 112; and a limiting recess 113 is defined in a position of the bottom of the accommodating recess 11 that is facing the second fixing element, and the second fixing element is located in the limiting recess 113; and the first fixing element 112 is located in the gap 212. The limiting recess 113 not only has a function of accommodating the second fixing element, but also has a function of limiting the second fixing element to prevent separation between the holder 2 and the case body 1.

Furthermore, in Fig. 10, the holder 2 further includes a hinge body 5 rotatably mounted on the sliding panel 21 via a rotation shaft 6; and an angle formed by the hinge body 5 and the sliding panel 21 is between 0° and 90°.

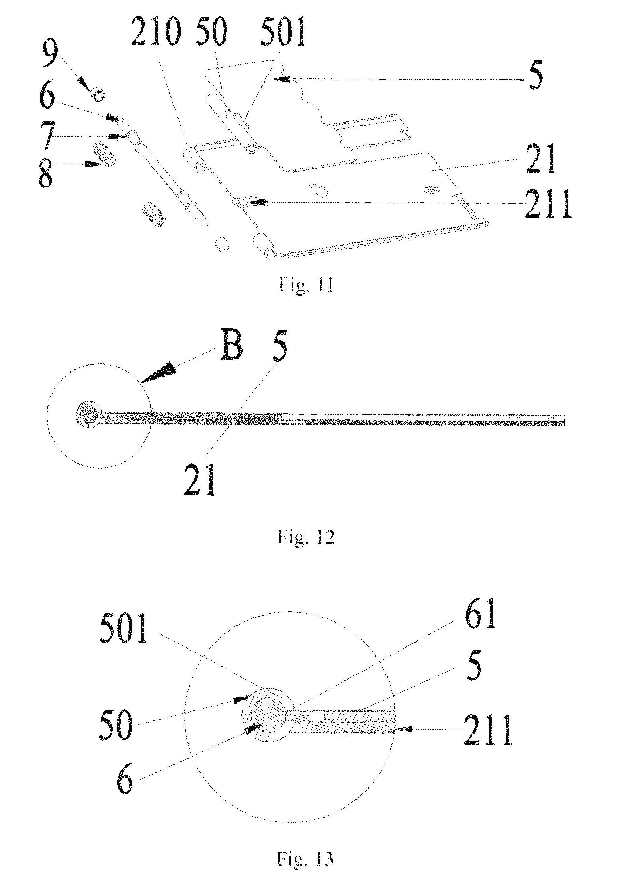

Specifically, in Fig. 11, two first shaft sleeves 210 are arranged on an outer side portion of the sliding panel 21, are spaced from each other, and are disposed coaxially; a second shaft sleeve 50 is arranged on a side portion of the hinge body 5; two opposite end portions of the rotation shaft 6 are rotatably inserted in the two first shaft sleeves 210 respectively, and a middle portion of the rotation shaft 6 is rotatably inserted in the second shaft sleeve 50. Relative rotation between the hinge body 5 and the sliding panel 21 can be realized via the rotation shaft 6.

The holder 2 further a compressed spring 8; and the compressed spring 8 is mounted on the rotation shaft 6, and is located between the first shaft sleeve 210 and the second shaft sleeve 50 to compress the hinge body 5. The compressed spring 8 increases friction force of the hinge body 5 rotating relative to the sliding panel 21, so that the hinge body can be in paralysis, no matter what angle the hinge body and the sliding panel 21 form.

In order to further increase friction force, a gasket 7 is arranged between the compressed spring 8 and the first shaft sleeve 210, and a gasket 7 is arranged between the compressed spring 8 and the second shaft sleeve 50. In the embodiment, the number of compressed springs 8 is two, and two compressed springs 8 are located on two sides of the second shaft sleeve 50. Accordingly, the number of gaskets 7 is four.

In Fig. 11, in the embodiment, two caps 9 are respectively mounted on two end portions of the rotation shaft 6; and the product can be more beautiful via the caps 9.

Furthermore, in Figs. 11-13, a resetting elastic flake 211 is formed on an outer side surface of the sliding panel 21; and a through-hole 501 is defined in a middle portion of the second shaft sleeve 50; and the resetting elastic flake 211 extends into the through-hole 501; and a resetting recess 61 is defined in the rotation shaft 6; when the hinge body 5 fits the sliding panel 21 closely, the resetting elastic flake 211 also extends into the resetting recess 61.

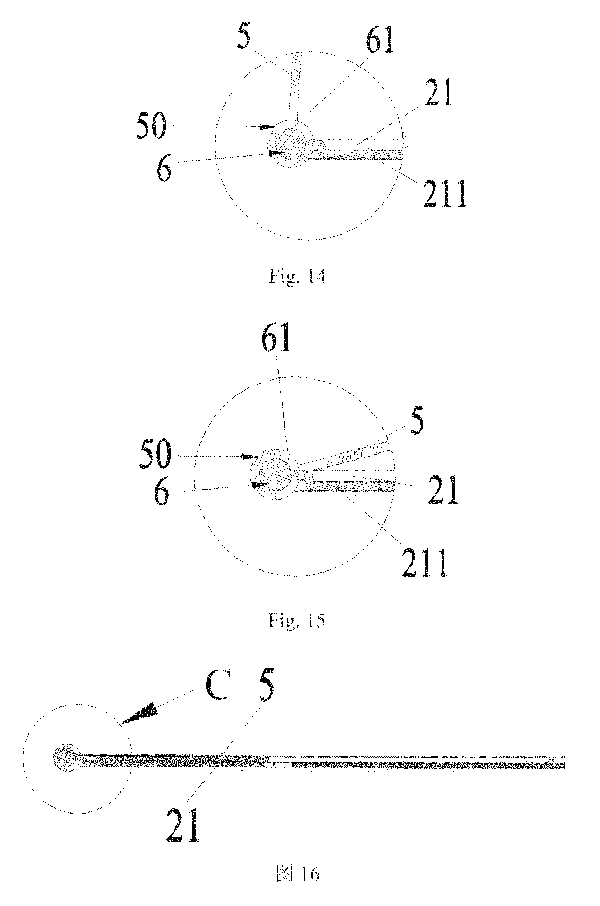

Then, when the hinge body 5 rotates relative to the sliding panel 21 at an angle, the resetting elastic flake 211 will get off the resetting recess 61, and abut against the rotation shaft 6; and the resetting elastic flake 211 will be bent, as shown in Fig. 14.

When the hinge body 5 in a state as shown in Fig. 14 rotates towards the sliding panel 21 slowly to make the hinge body 5 and the sliding panel 21 form an angle as shown in Fig. 15, the hinge body 5 will fit closely the sliding panel 21 automatically under the action of the resetting elastic flake 211, and the resetting elastic flake 211 will extend into the resetting recess 61.

### Second Embodiment

The difference between the second embodiment and the first embodiment lies in the shape of the rotation shaft 6 and the connecting relationship between the resetting elastic flake 211 and the rotation shaft 6.

In the embodiment, as shown in Figs. 16-19, no resetting recess 61 is defined in the rotation shaft 6, and the rotation shaft 6 is cylindrical.

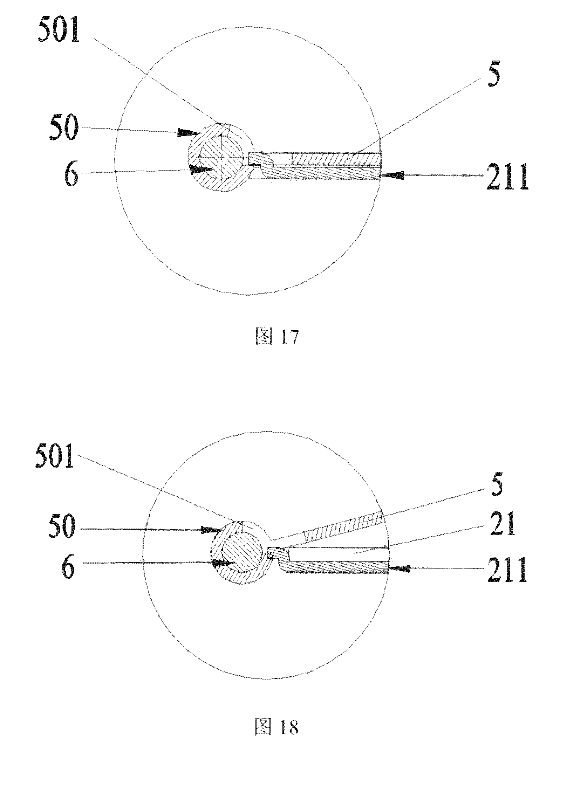

When the hinge body 5 fits the sliding panel 21 closely, the resetting elastic flake 211 extends into the through-hole 501 of the second shaft sleeve 50, and the resetting elastic flake 211 and the rotation shaft 6 are spaced, as shown in Fig. 17.

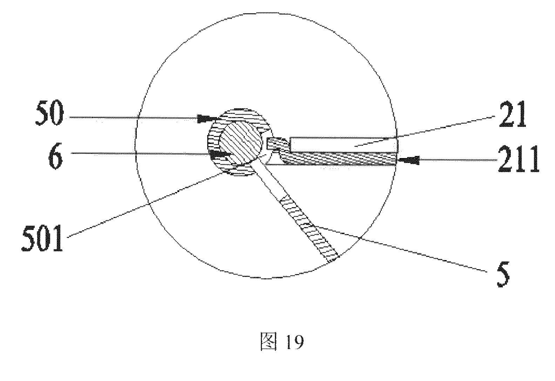

Then, when the hinge body 5 rotates relative to the sliding panel 21 at an angle, the resetting elastic flake 211 will get off the through-hole 501, and abut against the second shaft sleeve 50, as shown in Fig. 18; and the angle of the hinge body 5 rotating relative to the sliding panel 21 can reach 310°, as shown in Fig. 19.

When the hinge body 5 rotates towards the sliding panel 21 slowly to make the hinge body 5 and the sliding panel 21 form an angle as shown in Fig. 18, the hinge body 5 will fit closely the sliding panel 21 automatically, and the resetting elastic flake 211 will extend into the through-hole 501 under the action of the resetting elastic flake 211.

The protective case of the present application has the accommodating recess, and has the holder telescopably arranged in the accommodating recess; and as the holder is arranged in the accommodating recess, the holder can avoid damage resulting from collisions and the protective case can be more beautiful. The protective case of the present application further adopts the spring to connect the holder and the case body, so that the holder can be pushed out quickly when the holder is pulled out a certain distance. The protective case of the present application further adopts the resetting elastic flake, so that the sliding panel can fit the hinge body closely. The protective case of the application has a dual function in protecting and holding the smart device, and has beauty and practicability.

While the embodiments of the present application are described with reference to the accompanying drawings above, the present application is not limited to the above-mentioned specific implementations. In fact, the above-mentioned specific implementations are intended to be exemplary not to be limiting. In the inspiration of the present application, those ordinary skills in the art can also make many modifications without breaking away from the subject of the present application and the protection scope of the claims. All these modifications belong to the protection of the present application.

## Claims

1. A protective case comprising a case body (1) configured for accommodating a smart device, **characterized in that** an accommodating recess (11) is defined in the case body (1), and has an opening (110) in an outer surface of the case body (1); the protective case further comprises a holder (2) movably arranged in the accommodating recess (11) and telescopably arranged in the opening (110).

2. The protective case according to claim 1, **characterized in that** the holder (2) includes a sliding panel (21) slidably arranged in the accommodating recess (11) and telescopably arranged in the opening (110), and a hinge body (5) rotatably mounted on the sliding panel (21).

3. The protective case according to claim 2, **characterized in that** the protective case further comprises a guiding rail (111) mounted in the accommodating recess (11) and being perpendicular to a plane of the opening (110); and the sliding panel (21) is slidably arranged on the guiding rail (111); the protective case further comprises a fold line shaped or curved spring (3); and one end portion of the spring (3) is fixed in the accommodating recess (11), and the other end portion of the spring (3) is fixed on the bottom of the sliding panel (21); when the sliding panel (21) is entirely accommodated in the accommodating recess (11), the guiding rail (111) and a connecting line between two end portions of the spring (3) cooperatively form an acute angle.

4. The protective case according to claim 3, **characterized in that** a first fixing element (112) is arranged on the bottom of the accommodating recess (11); and a second fixing element is arranged on the sliding panel (21); and one end portion of the spring (3) is mounted on the first fixing element (112), and the other end portion of the spring (3) is mounted on the second fixing element; and a gap (212) is defined in a position of the sliding panel (21) that is facing the first fixing element (112), and the first fixing element (112) is located in the gap (212); and a limiting recess (113) is defined in a position of the bottom of the accommodating recess (11) that is facing the second fixing element, and the second fixing element is located in the limiting recess (113).

5. The protective case according to claim 2, **characterized in that** the hinge body (5) is rotatably mounted on the sliding panel (21) via a rotation shaft (6); and an angle formed by the hinge body (5) and the sliding panel (21) is between 0° and 90°.

6. The protective case according to claim 5, **characterized in that** two first shaft sleeves (210) are arranged on an outer side portion of the sliding panel (21), are spaced from each other, and are disposed coaxially; a second shaft sleeve (50) is arranged on a side portion of the hinge body (5); two opposite end portions of the rotation shaft (6) are rotatably inserted in the two first shaft sleeves (210) respectively, and a middle portion of the rotation shaft (6) is rotatably inserted in the second shaft sleeve (50).

7. The protective case according to claim 6, **characterized in that** the holder (2) further a compressed spring (8); and the compressed spring (8) is mounted on the rotation shaft (6), and is located between the first shaft sleeve (210) and the second shaft sleeve (50) to compress the hinge body (5).

8. The protective case according to claim 7, **characterized in that** a gasket (7) is arranged between the compressed spring (8) and the first shaft sleeve (210), and a gasket (7) is arranged between the compressed spring (8) and the second shaft sleeve (50).

9. The protective case according to claim 7, **characterized in that** a resetting elastic flake (211) is formed on an outer side surface of the sliding panel (21); and a through-hole (501) is defined in a middle portion of the second shaft sleeve (50); and the resetting elastic flake (211) extends into the through-hole (501); and a resetting recess (61) is defined in the rotation shaft (6); when the hinge body (5) fits the sliding panel (21) closely, the resetting elastic flake (211) also extends into the resetting recess (61).

10. The protective case according to claim 7, **characterized in that** a resetting elastic flake (211) is formed on an outer side surface of the sliding panel (21); and a through-hole (501) is defined in a middle portion of the second shaft sleeve (50); and when the hinge body (5) fits the sliding panel (21) closely, the resetting elastic flake (211) extends into the through-hole (501) of the second shaft sleeve (50), and the resetting elastic flake (211) and the rotation shaft (6) are spaced.
